# EUROPEAN PATENT SPECIFICATION

(11) **EP 1 167 700 B1**
(45) Date of publication and mention of the grant of the patent: **19.01.2005**
(21) Application number: 01103822.1
(22) Date of filing: 15.02.2001
(51) Int. Cl.: F01L 3/06

(54) **A valve device of an internal combustion engine**
Hubventilanordnung in einer Brennkraftmaschine
Agencement de soupape pour moteur à combustion interne

(30) Priority: 20.06.2000 JP 2000183989
(43) Date of publication of application: 02.01.2002
(73) Proprietor: Honda Giken Kogyo Kabushiki Kaisha, Minato-ku, Tokyo (JP)
(72) Inventor: Yoshida, Yutaka, 1-4-1 Chuo, Wako-shi, Saitama-ken (JP); Kanda, Tomohiro, 1-4-1 Chuo, Wako-shi, Saitama-ken (JP); Shimoyama, Kazuaki, 1-4-1 Chuo, Wako-shi, Saitama-ken (JP); Hara, Ikuro, 1-4-1 Chuo, Wako-shi, Saitama-ken (JP)
(74) Representative: Prechtel, Jörg, Dipl.-Phys. Dr.

(56) References cited:
- DE-C- 587 675
- GB-A- 277 875
- GB-A- 1 604 623
- US-A- 4 732 118
- US-A- 5 870 993

## Description

### BACKGROUND OF THE INVENTION

The present invention relates to a valve seat of an exhaust valve of an internal combustion engine capable of achieving exhaust performance. The present invention further relates to a valve device of an internal combustion engine including two suction valves and two exhaust valves arranged in a cylinder head.

Document GB 277875 A discloses a valve device of an internal combustion engine having a suction valve arranged in a cylinder head. The axis of the suction valve is directed parallel to the cylinder axis and an edge part of a suction air outlet end of a valve seat of that suction valve is expanded in a direction along a swirl stream. Document GB 277875 A, however, deals only with the filling of a cylinder with fresh combustion gas.

Further, document US 5870993 A discloses a method for operating a spark ignited reciprocating internal combustion engine. According to that document a large quantity of exhaust gas is recirculated. A specific swirling flow is imposed on the exhaust gas as it is introduced in the combustion chamber. To this end, the exhaust duct has a chamfer formed on only one side in the region of a flow cross section. The swirling flow of exhaust gas floating about an axis parallel to the cylinder axis, together with the supply of fresh gas, is to increase the fresh-gas concentration in the region where the spark plug is accommodated. Further, the axis of the valves of the engine are oriented oblique to the cylinder axis in order to enhance the creation of said swirling flow. Additionally, the chamfers formed on the exhaust duct point to a circumferential direction of the circular cylinder cover.

The present invention aims to make a high coefficient of discharge and a high swirl ratio compatible with each other without exerting a bad influence on combustion.

### SUMMARY OF THE INVENTION

According to the present invention, the above aim is attained by a valve device of an internal combustion engine, including an exhaust valve arranged in a cylinder head having an axis directed parallel with a cylinder axis, wherein an edge part at an exhaust gas inlet end of a valve seat of the exhaust valve is expanded toward the cylinder axis.

In this invention, a coefficient of discharge can be raised by expanding an edge part at an exhaust gas inlet end of a valve seat of the exhaust valve in a direction. And an advantage of the upright type valve can be utilized and additional working of an already worked valve seat or improvement of a present valve seat is easy.

The above aim is further attained by a valve device with all features of claim 3.

### BRIEF DESCRIPTION OF THE DRAWINGS

Fig.1a is a longitudinal sectional side view of a valve seat of an exhaust valve according to an embodiment of the present invention;
Fig. 1b is a plan view of an opening end of the valve seat;
Fig. 2 is a view showing arrangement of suction valves and exhaust valves in a cylinder head and direction of expanding of opening end edge parts of the valve seats;
Fig. 3 is a graph showing results of tests for confirming effects of the present invention;
Fig. 4 is another graph showing results of tests for confirming effects of the present invention;
Fig. 5 is a further graph showing results of tests for confirming effects of the present invention;
Fig. 6 is a longitudinal sectional view showing an example of a suction (exhaust) valve and a valve seat of a customary internal combustion engine; and
Fig. 7 is a longitudinal sectional view showing another example of a suction (exhaust) valve and a valve seat of a customary internal combustion engine.

### DETAILED DESCRIPTION OF THE PREFERRED EMBODIMENT

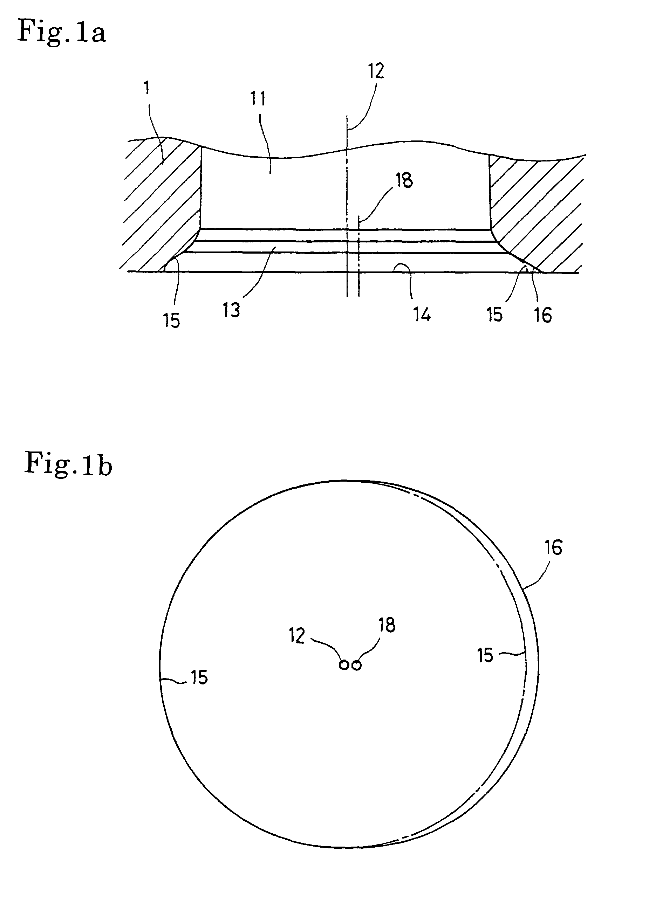

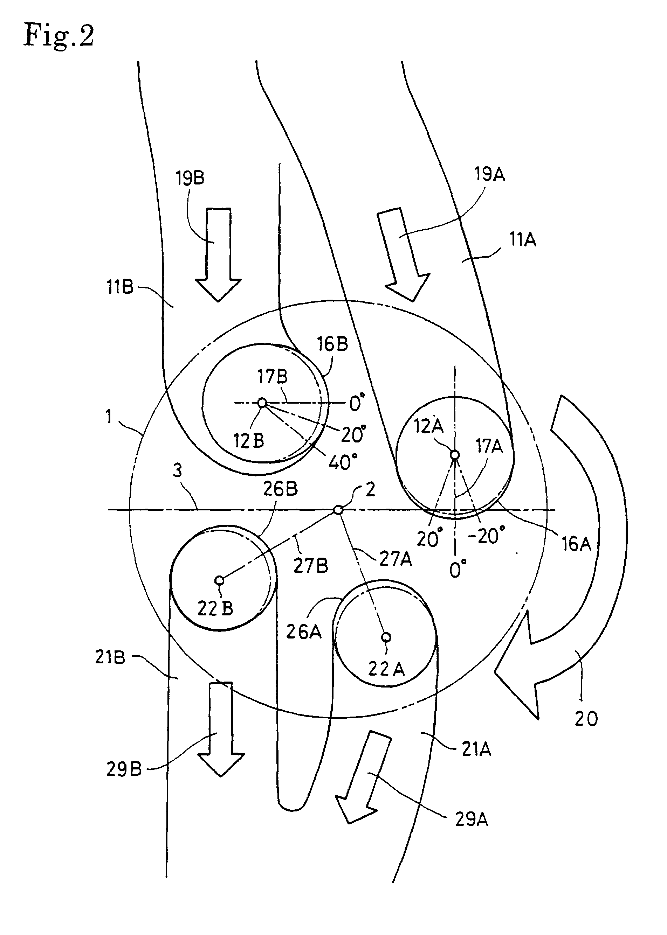

Fig. 1a is a longitudinal sectional side view of a valve seat of an exhaust valve according to an embodiment of the present invention, and Fig. 1b is a plan view of an opening end of the valve seat. Fig. 2 is a view showing arrangement of suction valves and exhaust valves in a cylinder head and direction of expanding of opening end edge parts of the valve seats.

In Figs. 1a and 1b, 1, 11, 12 and 13 denote a cylinder head, an exhaust port, an axis of an exhaust valve (not shown) and a valve seat, respectively. The present embodiment is what is called an upright type valve and the axis 12 of the exhaust valve is parallel with an axis of a cylinder. In this embodiment, after a rotary surface 15 is formed about the axis 12 as a valve seat, the rotary surface 15 is additionally shaved extending over a half circumference about an offset axis 18 shifted from the axis 15 in one direction (right direction in the figure), so that an edge part 16 of an exhaust gas inlet end 14 of the valve seat is expanded in one direction (right direction in the figure) from the rotary surface 15.

In Fig. 2, 1 denotes the cylinder head, 11A and 11B denote suction ports, 12A and 12B denote axes of suction valves (not shown), 16A and 16B denote suction air outlet end edges of valve seats of the suction valves, 21A and 21B denote exhaust ports, 22A and 22B denote axes of exhaust valves (not shown), and 26A and 26B denote exhaust gas inlet end edges of valve seats of the exhaust valves.

Air and fuel in suction air (air-fuel mixture to be exact) 19A, 19B inhaled into a combustion chamber from the suction port 11A, 11B through the suction valve are mixed with each other well by a swirl stream 20 generated within the combustion chamber and burned. Resulted exhaust gas 29A, 29B is discharged to the exhaust port 21A, 21B through the exhaust valve.

In the embodiment of Fig. 2, the direction of expanding 17A of the suction air outlet edge part 16A of a suction valve seat is perpendicular to a plane including a cylinder axis 2 and a crankshaft axis 3, and the direction of expanding 17B of the suction air outlet edge part 16B of another suction valve seat is parallel with the above-mentioned plane. Both of these directions 17A and 17B correspond to direction of the swirl stream 20. The directions of expanding 27A and 27B of exhaust gas inlet end edge parts 26a and 26B of the exhaust valve seats are both directed toward the cylinder axis 2.

According to this embodiment, since an edge part 16A, 16B at a suction air outlet end of a valve seat of the suction valve is expanded in a direction along swirl stream 20, fluid resistance is reduced and directivity of suction air is increased, so that both a high coefficient of discharge and a high swirl ratio can be realized without setting the valve with an included angle. If the direction of expanding 17A, 17B of the edge part is changed suitably, it is possible to change only swirl as occasion demands while maintaining coefficient of discharge high. Regarding the exhaust valve too, coefficient of discharge can be raised by expanding the edge part 20A, 20B at the exhaust gas outlet end of the valve seat in a direction.

Since the valve is an upright type one and therefore the combustion chamber is flat, squish stream can be utilized for improving combustion by cooperative effect with the swirl, so that fuel consumption is improved and harmful substance in exhaust gas is reduced.

Further, swirl ratio can be improved at will merely by applying an additional working to an already worked valve seat and also the above-mentioned direction of expanding can be set freely. Therefore, improvement of a present valve seat is also easy.

Next, tests carried out for confirming effects of the present invention will be described.

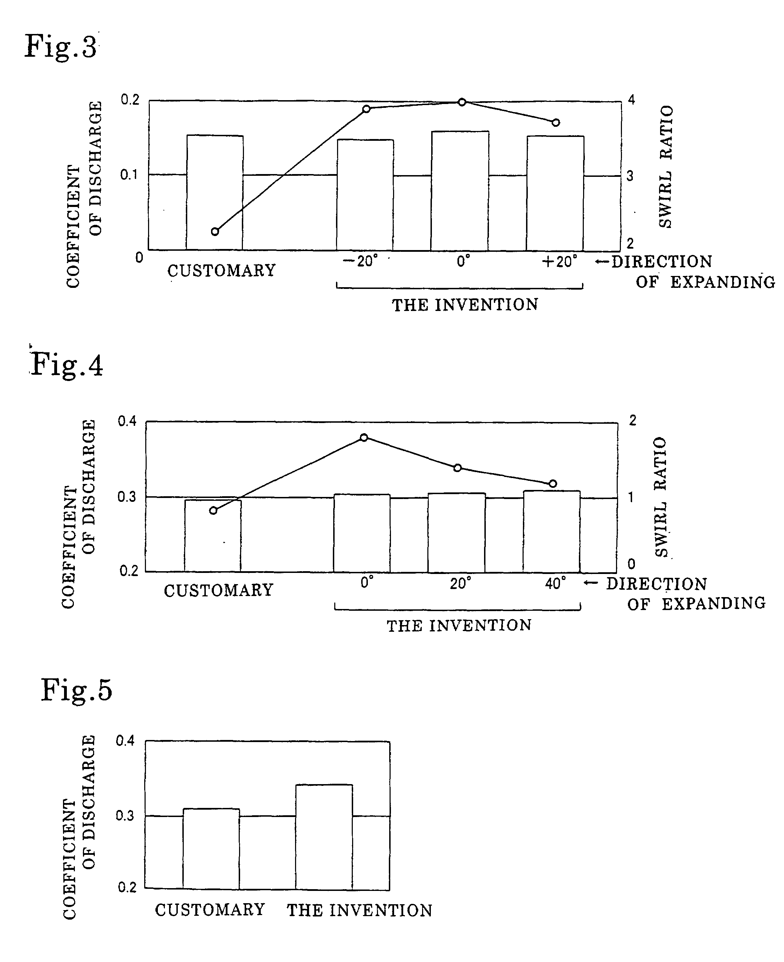

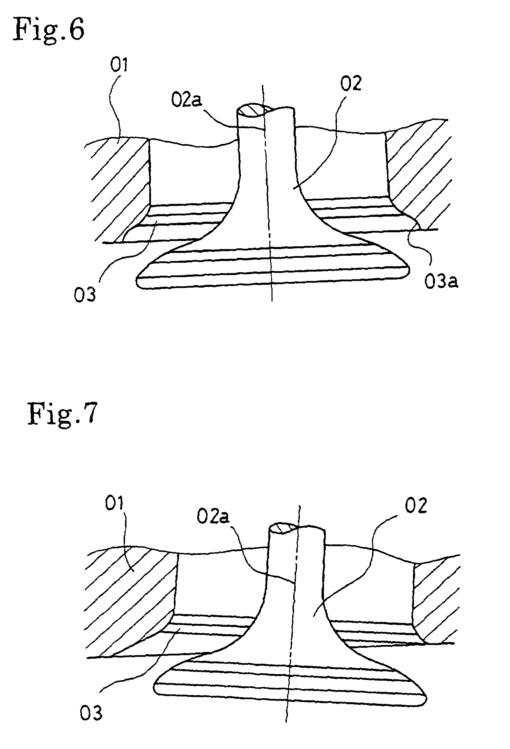

Firstly, the direction of expanding 17A of the edge part of the first suction valve 12A was changed in three ways as shown in Fig. 2 while keeping the second suction valve 12B closed and coefficient of discharge and swirl ratio were measured for each case to be compared with those of the customary valve shown in Fig. 6. The result is shown in Fig. 3, in which the bar graph shows coefficients of discharge and the bent line shows swirl ratios. Next, the direction of expanding 17B of the edge part of the second suction valve 12B was changed in three ways as shown in Fig. 2 while keeping the direction of expanding 17A of the edge part of the first suction valve 12A at 0° in the state that both suction valves are open, and coefficient of discharge and swirl ratio were measured for each case to be compared with those of the customary valve. The result is shown in Fig. 4.

It can be known from Figs. 3, 4 that according to the valve seat of the present invention, swirl ratio can be markedly improved compared with the customary one without lowering coefficient of discharge. Further, it can be also known that by changing the direction of expanding of the edge part of the valve seat, swirl ratio can be changed largely while maintaining coefficient of discharge constant.

Fig. 5 shows coefficient of discharge of the exhaust valve of the present invention in comparison with that of the customary valve shown in Fig. 6. Regarding the exhaust valve coefficient of discharge is improved according to the present invention.

### For additional technical background, reference is made to Figs. 6 and 7:

Fig. 6 is a longitudinal sectional view showing an example of a suction (exhaust) valve and a valve seat of a customary internal combustion engine. 01, 02 and 03 denote a cylinder head, a suction or exhaust valve and a valve seat, respectively. In this example, an axis 02a of the suction (exhaust) valve 02 is directed parallel with a cylinder axis (not shown), that is, the valve is an upright type valve. In order to accept the valve seat 03 within the bore, an opening end of the valve seat (an outlet end in case of the suction valve or an inlet end incase of the exhaust valve) is formed in a rounded shape 03a.

Fig. 7 is a longitudinal sectional view showing another example of a suction (exhaust) valve and a valve seat of a customary internal combustion engine. In this example, the axis 02a of the suction (exhaust) valve 02 is not parallel with the cylinder axis, but the valve axis 02a is inclined relatively to the cylinder axis with an included angle to accept the valve within the bore.

According to the customary valve seat shape as shown in Fig. 6, it is difficult to make a high coefficient of discharge and a high swirl compatible with each other. According to the valve seat shape as shown in Fig. 7, the coefficient of discharge can be made high, but squish stream disappears or weakens to deteriorate combustion.

A valve seat of an exhaust valve of an internal combustion engine capable of making a high coefficient of discharge and a high swirl ratio compatible with each other without exerting a bad influence on combustion is provided. The valve device includes an exhaust valve arranged in a cylinder head having an axis directed parallel with a cylinder axis, and an edge part at an exhaust gas inlet end of a valve seat of the exhaust valve is expanded toward the cylinder axis.

## Claims

1. A valve device of an internal combustion engine including an exhaust valve arranged in a cylinder head (1), wherein
said exhaust valve has an axis (22A, 22B) directed parallel with a cylinder axis (2), **characterized by** the fact that an edge part (26A, 26B) at an exhaust gas inlet end of a valve seat of said exhaust valve is expanded toward said cylinder axis (2).

2. The vaive device of an internal combustion engine according to claim 1, wherein said edge part (26A, 26B) at the exhaust gas inlet end of the valve seat of the exhaust valve is expanded so as to extend over a half circumference about an offset axis shifted from said axis (22A or 22B) of the exhaust valve.

3. A valve device of an internal combustion engine including two suction valves and two exhaust valves arranged in a cylinder head (1), said suction valves having respective axes (12A, 12B) directed parallel with a cylinder axis (2), wherein an edge part (16A, 16B) at a suction air outlet end (14) of a valve seat (13) of each of said suction valves is expanded in a direction along a swirl stream (20) within a combustion chamber of said engine,
**characterized in that**
said exhaust valves have respective axes (22A, 22B) directed parallel with said cylinder axis (2), wherein an edge part (26A, 26B) at an exhaust gas inlet end of a valve seat of said exhaust valve is expanded toward said cylinder axis (2),
wherein said edge part (16A, 16B) at the suction air outlet end (14) of the valve seat (13) of each of the suction valves is expanded so as to extend over a half circumference about an offset axis (18) shifted from said axis (12A, 12B) of the suction valve, and said edge part (26A, 26B) at the exhaust gas inlet end of the valve seat of each of the exhaust valves is expanded so as to extend over a half circumference about an offset axis shifted from said axis (22A or 22B) of the exhaust valve.

4. The valve device of an internal combustion engine according to claim 3, wherein the edge parts (16A, 16B) at the suction air outlet ends (14) of the valve seats (13) of said suction valves are expanded in different direction.

5. The valve device of an internal combustion engine according to claim 3, wherein one (16A) of the edge parts (16A, 16B) at the suction air outlet ends (14) of the valve seats (13) of said suction valves is expanded perpendicular to a plane including the cylinder axis (2) and a crankshaft axis (3), and another (16B) of the edge parts (16A, 16B) at the suction air outlet ends (14) of the valve seats (13) of said suction valves is expanded parallel with a plane including the cylinder axis (2) and a crankshaft axis (3).

## Patentansprüche

1. Ventilvorrichtung einer Brennkraftmaschine mit einem in einem Zylinderkopf (1) angeordneten Auslassventil, bei welcher das Auslassventil eine Achse (22A, 22B) aufweist, die parallel zu einer Zylinderachse (2) ausgerichtet ist, **dadurch gekennzeichnet, dass** ein Randteil (26A, 26B) bei einem Abgas-Einlassende eines Ventilsitzes des Auslassventils zu der Zylinderachse (2) hin erweitert ist.

2. Ventilvorrichtung einer Brennkraftmaschine nach Anspruch 1, bei welcher der Randteil (26A, 26B) bei dem Abgas-Einlassende des Ventilsitzes des Auslassventils derart erweitert ist, dass er über einen halben Umfang um eine versetzte Achse sich erstreckt, welche von der Achse (22A oder 22B) des Auslassventils aus verschoben ist.

3. Ventilvorrichtung einer Brennkraftmaschine mit zwei Ansaugventilen und zwei Auslassventilen, welche in einem Zylinderkopf (1) angeordnet sind, wobei die Ansaugventile jeweilige Achsen (12A, 12B) aufweisen, welche parallel zu einer Zylinderachse (2) ausgerichtet sind, wobei ein Randteil (16A, 16B) bei einem Ansaugluft-Auslassende (14) eines Ventilsitzes (13) eines jeden der Ansaugventile in einer Richtung entlang eines Drallstroms (20) innerhalb einer Brennkammer der Maschine erweitert ist,
**dadurch gekennzeichnet, dass** die Auslassventile jeweilige Achsen (22A, 22B) aufweisen, welche parallel zu der Zylinderachse (2) ausgerichtet sind, wobei ein Randteil (26A, 26B) bei einem Abgas-Einlassende eines Ventilsitzes des Auslassventils zu der Zylinderachse (2) hin erweitert ist, wobei der Randteil (16A, 16B) bei dem Ansaugluft-Auslassende (14) des Ventilsitzes (13) eines jeden der Ansaugventile derart erweitert ist, dass er sich über einen halben Umfang um eine versetzte Achse (18) erstreckt, welche von der Achse (12A, 12B) des Ansaugventils verschoben ist, und wobei der Randteil (26A, 26B) des Abgas-Einlassendes des Ventilsitzes eines jeden der Auslassventile derart erweitert ist, dass er sich über einen halben Umfang um eine versetzte Achse erstreckt, welche von der Achse (22A oder 22B) des Auslassventils aus verschoben ist.

4. Ventilvorrichtung einer Brennkraftmaschine nach Anspruch 3, bei welcher die Randteile (16A, 16B) bei den Ansaugluft-Auslassenden (14) der Ventilsitze (13) der Ansaugventile in unterschiedliche Richtungen erweitert sind.

5. Ventilvorrichtung einer Brennkraftmaschine nach Anspruch 3, bei welcher einer (16A) der Randteile (16A, 16B) bei den Ansaugluft-Auslassenden (14) der Ventilsitze (13) der Ansaugventile orthogonal zu einer Ebene erweitert ist, welche die Zylinderachse (2) und eine Kurbelwellenachse (3) enthält, und bei welcher ein anderer (16B) der Randteile (16A, 16B) bei den Ansaugluft-Auslassenden (14) der Ventilsitze (13) der Ansaugventile parallel zu einer Ebene erweitert ist, welche die Zylinderachse (2) und eine Kurbelwellenachse (3) enthält.

## Revendications

1. Dispositif à soupape d'un moteur à combustion interne comprenant une soupape d'échappement disposée dans une culasse (1) dans lequel
ladite soupape d'échappement possède un axe (22A, 22B) dirigé parallèlement à un axe (2) de cylindre, **caractérisé par le fait qu'**une partie de bord (26A, 26B) à une extrémité d'entrée du gaz d'échappement d'un siège de soupape de ladite soupape d'échappement est agrandie vers ledit axe (2) de cylindre.

2. Dispositif à soupape d'un moteur à combustion interne selon la revendication 1, dans lequel ladite partie de bord (26A, 26B) à l'extrémité d'entrée du gaz d'échappement du siège de soupape de la soupape d'échappement est agrandie de sorte qu'il s'étend sur une moitié de circonférence autour d'un axe décalé déplacé depuis ledit axe (22A ou 22B) de la soupape d'échappement.

3. Dispositif à soupape d'un moteur à combustion interne comprenant deux soupapes d'aspiration et deux soupapes d'échappement disposées dans une culasse (1), lesdites soupapes d'aspiration possédant des axes respectifs (12A, 12B) dirigés parallèlement à un axe (2) de cylindre, dans lequel une partie de bord (16A, 16B) à une extrémité de sortie d'air d'aspiration (14) d'un siège de soupape (13) de chacune desdites soupapes d' aspiration est agrandie dans une direction le long d'un courant de tourbillon (20) dans une chambre à combustion dudit moteur,
**caractérisé en ce que**
lesdites soupapes d'échappement possèdent des axes respectifs (22A, 22B) dirigés parallèlement audit axe (2) de cylindre, dans lequel une partie de bord (26A, 26B) à une extrémité d'entrée de gaz d'échappement d'un siège de soupape de ladite soupape d'échappement est agrandie vers ledit axe (2) de cylindre, dans lequel ladite partie de bord (16A, 16B) à l'extrémité de sortie d'air d'aspiration (14) du siège de soupape (13) de chacune des soupapes d'aspiration est agrandie afin de s'étendre sur une moitié de circonférence autour d'un axe (18) décalé déplacé depuis ledit axe (12A, 12B) de la soupape d'aspiration, et ladite partie de bord (26A, 26B) à l'extrémité d'entrée de gaz d'échappement du siège de soupape de chacune des soupapes d'échappement est agrandie afin de s'étendre sur une moitié de circonférence autour d'un axe décalé déplacé depuis ledit axe (22A ou 22B) de la soupape d'échappement.

4. Dispositif à soupape d'un moteur à combustion interne selon la revendication 3, dans lequel les parties de bord (16A, 16B) aux extrémités de sortie d'air d'aspiration (14) des sièges de soupape (13) desdites soupapes d'aspiration, sont agrandies dans des directions différentes.

5. Dispositif à soupape d'un moteur à combustion interne selon la revendication 3, dans lequel une (16A) des parties de bord (16A, 16B) aux extrémités de sortie d'air d'aspiration (14) des sièges de soupape (13) desdites soupapes d'aspiration est agrandie perpendiculairement à un plan comprenant l'axe (2) de cylindre et un axe (3) de vilebrequin, et une autre (16B) des parties de bord (16A, 16B) aux extrémités de sortie d'air d'aspiration (14) des sièges de soupape (13) desdites soupapes d'aspiration est agrandie parallèlement à un plan qui comprend l'axe (2) de cylindre et un axe (3) de vilebrequin.
